(19) Europäisches Patentamt

European Patent Office

Office européen des brevets

(11) Publication number: **0 271 762 B1**

# EUROPEAN PATENT SPECIFICATION

(45) Date of publication of patent specification: **27.05.92**   (51) Int. Cl.⁵: **A01D 34/73**

(21) Application number: **87117761.4**

(22) Date of filing: **01.12.87**

(54) **Line feed mechanism for line trimmers.**

(30) Priority: **17.12.86 US 943309**

(43) Date of publication of application:
**22.06.88 Bulletin 88/25**

(45) Publication of the grant of the patent:
**27.05.92 Bulletin 92/22**

(84) Designated Contracting States:
**AT BE DE ES FR GB IT NL SE**

(56) References cited:
**EP-A- 0 005 540       EP-A- 0 140 634
EP-A- 0 203 011       EP-A- 0 215 416
WO-A-85/04548       DE-A- 3 005 968
GB-A- 2 078 075       US-A- 4 161 820
US-A- 4 183 138       US-A- 4 259 782**

(73) Proprietor: **White Consolidated Industries, Inc.**
**11770 Berea Road**
**Cleveland Ohio 44111(US)**

(72) Inventor: **Collins, Imack L.**
**8200 Pines Road Apt. 1612**
**Shreveport Louisiana 71129(US)**

(74) Representative: **Klunker . Schmitt-Nilson . Hirsch**
**Winzererstrasse 106**
**W-8000 München 40(DE)**

## Description

This invention relates generally to flexible line trimmers, and more particularly relates to a head assembly for containing a supply of line and for feeding the line out in controlled increments when the head assembly is pushed against the ground by the operator.

Over the past decade, a class of flexible line cutting devices for trimming grass and other vegetation around trees, fences and the like, or edging along sidewalks and the like, has achieved widespread acceptance in the marketplace. These devices usually contain a supply of monofilament nylon line stored on a spool with a free end extending from an aperture in a head rotating at typically between 3,000 - 8,000 r.p.m. A number of systems have been devised to maintain a cutting swath having a diameter of from 12 to 20 inches (ca. 30 to 50 cm) for various motors of different power is typical. So long as the spool and housing rotate at the same speed, no additional line is payed out. However, when the spool is allowed to rotate relative to the housing, or the housing to rotate relative to the spool, an additional length of line is payed out to replenish the line as it is lost due to wear or breakage.

The so-called bump-feed system is the most widely used to control the payout of line to maintain the desired cutting length. In one type of device typified by U. S. Patents 4,183,138 and 4,274,201, for example, the housing is driven by the drive shaft of the prime mover and the storage spool is disposed to reciprocate along the axis of rotation relative to the housing, first upwardly in response to tapping a member connected to the spool against the ground, and then downwardly in response to a spring biasing the spool back to the normal running position. An escapement mechanism limits the maximum relative rotation between the housing and the spool to thereby limit the amount of line payed out. When urged to the upward position by engagement with the ground, the spool is released from a first set of locking teeth and allowed to rotate a short increment as a result of the centrifugal force pulling on the line which is being rotated in the cutting plane before engaging a second set of escapement teeth which prevents further rotation. Upon being returned by the spring to the lower position, the spool is allowed to rotate an additional predetermined increment before again being restrained by the lower set of escapement teeth, thus paying out a controlled increment of line. The operator may repeat this procedure as often as required while operating the device.

In another similar device, such as disclosed in U. S. Patent No. 4,189,833, the spool is driven by the prime mover and the housing is reciprocated axially relative to the spool to achieve indexing and line payout.

In yet a third distinct class of bump feed devices is represented by the device disclosed in U. S. Patent 4,236,309, where neither the spool nor housing is axially reciprocated, but a third member is reciprocated to achieve payout. These devices are significantly more complex and expensive to fabricate, assemble, and to replace an exhausted supply of line.

In the first described system, drive power is coupled from the shaft to the housing, then through the escapement teeth to the spool and associated ground bumping mechanism. In the second system, power is applied from the shaft to the spool, then through the tooth mechanism to the housing. In each system, the spring must be disposed between the housing and the spool, tending to urge one downwards from the other. When the supply of cutting line on the spool is exhausted, the device must be disassembled by removing either the spool from the driven housing or the housing from the driven spool. In either case, the spring disposed between the two must also be removed. Line is then either rewound on the spool, or a new spool with line is used. The line is first threaded through the aperture in the housing, then the housing and spool urged into position by compressing the spring. The difficulty of threading the line from the spool through the aperture while inserting the spool into the housing against the force of the spring is a difficult and substantial and inconvenience for many customers. Further, for effective manufacturing costs, it is desirable for a head to be usable when driven in either direction of rotation, with the line wound on the spool in either direction.

In accordance with the pre-characterizing part of claim 1, DE-A-30 05 968 discloses a head assembly in which the locking mechanism is comprised of a tube member attached to the motor shaft by a screw and being biased away from an upper housing member by a coil spring which acts between said upper housing member and a bottom face of the tube member. A lower housing member is in the form of a cassette which can be attached to and detached from the upper housing member by means of cooperating tabs and grooves provided on said two housing members.

The lower housing member carries the spool member which is clamped between the two housing members when the lower housing member is attached to the upper housing member.

The torque of the driving motor is transmitted through the upper housing member, said cassette constituting a lower housing member, and said tube member acting as a locking means, to the spool member. To this end, engagement teeth are provided on the inner wall of the hub of the spool member and of the tube member acting as the locking means, while axial grooves are provided within an inner wall of the lower housing member.

Thereby, the torque is indirectly transmitted from the motor shaft to the spool by a plurality of components, wherein force transmitting elements are constituted by said teeth and grooves. Since these elements are disposed in the near of the rotational axis, only small leverages are available for transmitting the driving force from the motor to the spool member.

When the spool is to be replaced since the line is consumed, the lower housing member is detached from the upper housing member thereby also removing the spool and leaving the downwardly depending locking tube member, which encases the spring. The fresh spool must be fitted by placing the hub of the spool over said downwardly depending structure. At the same time the lower housing is placed into the upper housing while the spool is hidden from view. If the spool is slightly off center, the edge of the spool hub would catch on the tube like locking member, preventing closure of the two housing members.

It is the problem underlying the present invention, to provide for a head assembly for a flexible line trimmer in which a new supply of line on a spool can be conveniently replaced without having to disassemble the portion of the unit including the biasing spring, also providing for a maximum leverage resulting in minimum forces tending to wear and destroy certain components which are in engagement with each other.

This problem is solved by the present invention in accordance with the features set out in claim 1. Specific features of the invention are defined in the dependent patent claims.

According to a specific embodiment of the invention, the locking plate and cup member is driven by the housing member while being permitted to reciprocate axially, while the button member is driven by the cover ring member by way of the housing member while also permitting the button member to reciprocate axially. The spool is held against axial reciprocation by the cover member and the housing member in a manner to permit rotation of the spool relative to the housing. The upper and lower faces of the spool have radially extending ribs which cooperate with locking teeth on the lower face of the locking plate and escapement teeth on the upper edge of the button member to lock the spool against rotation when the locking plate and cup member are in the lower, normal running position, and to permit the spool to rotate through a controlled increment when the button is bumped against the ground and thus reciprocated, along with the locking plate member, upwardly then downwardly as a result of the biasing force of the spring. The spool may be replaced merely by removing the cover ring and button members from the housing.

In one embodiment of the invention, the locking plate and cup member is retained in place substantially in its lowermost position by retention means carried by the outer wall of the housing means. This may conveniently comprise a metal eyelet inserted in the aperture of the housing member through which the line extends into the cutting plane. As is well known, a metal bearing surface for the plastic line is essentially required to prevent friction welding of the plastic line to the plastic housing member. The full spool may then be replaced and the cover, with the button member therein, coupled to the housing without fighting the force of the spring. This procedure requires minimum mechanical knowledge and manual dexterity on the part of the operator. An alternative retention means is connected to the center section of the housing member and passed through a central aperture in the locking plate and cup member, with a suitable head below the aperture to hold the locking plate and cup members in place when the cover ring member and button member are removed to replace the spool and line.

Another important advantage of the present invention is that the system can be operated in either direction of rotation merely by providing an appropriate coupling to the prime mover. Further, operation is not affected by the direction in which the line is wound on the spool.

## DESCRIPTION OF THE DRAWING

FIGURE 1 is a top view of a head constructed in accordance with the present invention;

FIGURE 2 is a sectional view taken substantially on lines 2-2 of FIGURE 1;

FIGURE 3 is a longitudinal sectional view also taken substantially on lines 2-2 of FIGURE 1, but exploded in the axial direction to illustrate its mode of assembly;

FIGURE 4 is a bottom view of the locking plate and cup member together with the housing member of the assembly of FIGURE 3, the vantage point being represented by line 4-4 on FIGURE 3;

FIGURE 5 is a plan view of the spool illustrated in the exploded view of FIGURE 3, the vantage point being represented by line 5-5 on FIGURE 3;

FIGURE 5a is a sectional view taken substantially on lines 5a-5a of FIGURE 3;

FIGURE 5b is a sectional view taken substantially on lines 5b-5b of FIGURE 3;

FIGURE 6 is a top view of the lower cover ring member and ground engaging button member of FIGURE 3, the vantage point being represented by lines 6-6 of FIGURE 3;

FIGURE 7 is a longitudinal sectional view taken on the same lines as FIGURE 2, with the ground engaging button member, and the locking plate and cup member shifted upwardly to initiate indexing of the spool as a result of the button member being bumped against the ground;

FIGURES 8a and 8b are longitudinal sectional views of an alternative embodiment of a head in accordance with the present invention, with FIGURE 8A illustrating the head in the bumped position and FIGURE 8B illustrating the head in the normal running position; and

FIGURES 9a and 9b are longitudinal sectional views of still another alternative embodiment of a head in accordance with the present invention, with FIGURE 9a illustrating the head in the bumped position and FIGURE 9b illustrating the head in the normal running position.

Referring now to the drawings, a head assembly in accordance with the present invention is indicated generally by the reference numeral 10. The head assembly 10 is comprised of five injection molded plastic parts including a main housing member, indicated generally by the reference numeral 12, a locking plate and cup member, indicated generally by the reference numeral 14, a spool, indicated generally by the reference numeral 16, a lower cover member, indicated generally by the reference numeral 18, and a ground engaging button member, indicated generally by the reference numeral 20. In addition, there are three metallic parts, including an arbor 28, a coil compression spring 30, and an eyelet 32, for a total of eight parts.

The upper housing 12 has a central bore 33 which receives the arbor 28. The arbor has internal threads 34 which are threaded onto a drive shaft (not illustrated) of a conventional line trimmer, and an external spline 35 which is received in a mating portion of the housing 12 to provide a positive drive. One important advantage of this invention is that the arrangement of parts permits the head to be operated while rotating in either direction by various prime movers merely by reversing the direction of the threads 34 in the arbor.

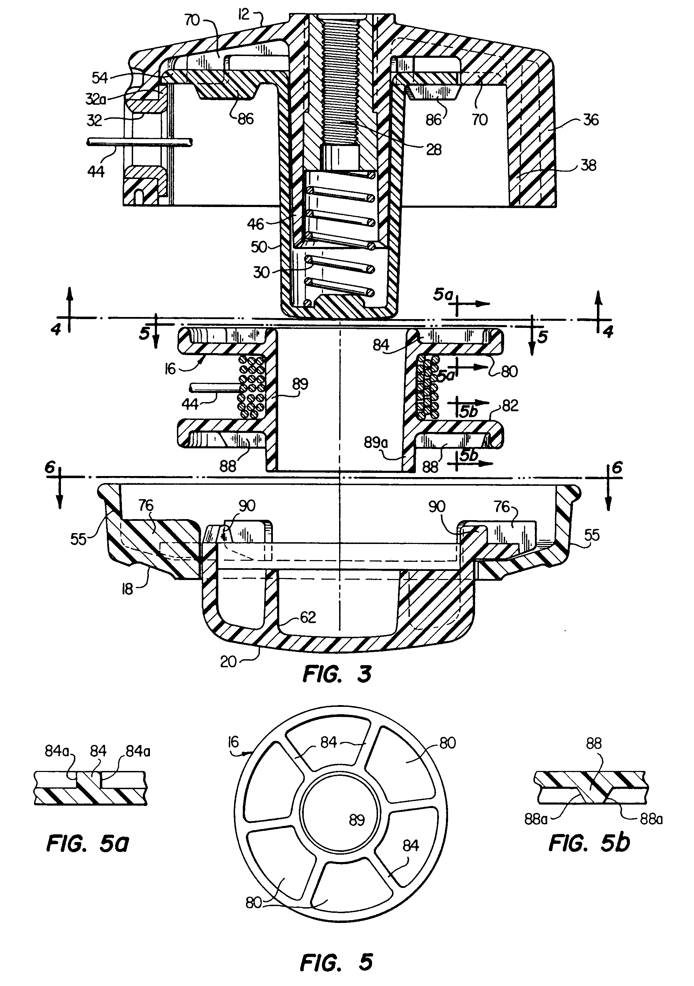

The housing 12 includes outer and inner cylindrical walls 36 and 38, respectively, which merge into a narrowed portion of the double wall 40a to receive the metallic eyelet 32 through which the cutting line 44 extends into the cutting plane. A cylindrical inner wall forms chamber 46 for the coil spring 30. The upper locking plate and cup member 14 has a cup-like portion 50 which is slidably disposed around the tubular wall 46 of the housing so that the coil spring 30 is compressed between the lower closed end 52 of the cup-shaped portion and the lower end of the arbor 28. The member 14 includes a disc-shaped upper locking plate 53 which extends as a tab portion 54 (see also FIGURE 4) radially outwardly to a point above the flanged edge 32a of the eyelet 32. The eyelet flange 32a retains the locking plate and cup member 14 substantially in the assembled position illustrated in FIGURE 3, when the unit is disassembled by interfering with the downward movement of the tab portion 54 of the locking plate.

The cover ring 18 includes a peripheral flange portion 55 which is disposed around the lower end of the outer cylindrical wall 36 of the housing and may be locked in place by any suitable conventional means, but preferably by three tabs 56 (see FIGURE 4) which project outwardly from the lower end of the outer peripheral wall 36 into three mating grooves 58 in the cover ring. The three tabs 56 pass into the openings 60 adjacent the slots 58 as the cover ring is moved axially relative to the housing, then rotated to move the tabs 56 into the grooves to prevent axial displacement. A locking tab 62 is biased inwardly as the tabs are forced into the openings 60, then springs back into position to prevent relative rotation and lock the tabs 56 in the grooves 58. To remove the cover ring, the locking tab is depressed to permit the cover to be rotated and move the tabs back from the grooves 58 to the openings 60. This structure has been in commercial use for a number of years and does not, per se, constitute a portion of the present invention. Any other suitable means for removedly locking the cover to the housing may be employed.

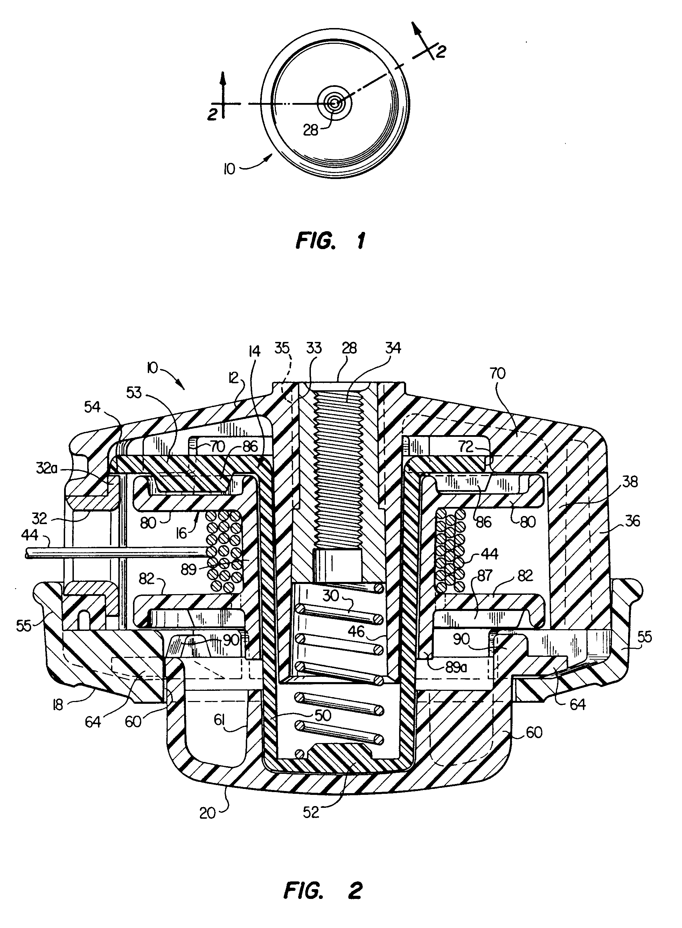

The ground engaging button 20 projects through an axially centered opening 60 in the cover ring 18 and has a central cup-shaped portion 61 adapted to mate with the lower end of the locking plate and cup member 14. The button member 20 includes radially outwardly extending circumferential flange portion 64 which projects beyond the boundary of the opening 60. The parts are so dimensioned that when the cover plate 18 is attached to the housing 12 with the tabs 56 received in the grooves 58, the button member 20 engages the lower end of the locking plate and cup member 14 so that the cover plate engages the flange 64 and forces the button member against the bottom of the locking plate and cup member 14 to preferably slightly compress the spring, which results in the tab 54 being moved from contact with the eyelet to the slightly spaced position illustrated in FIGURE 2.

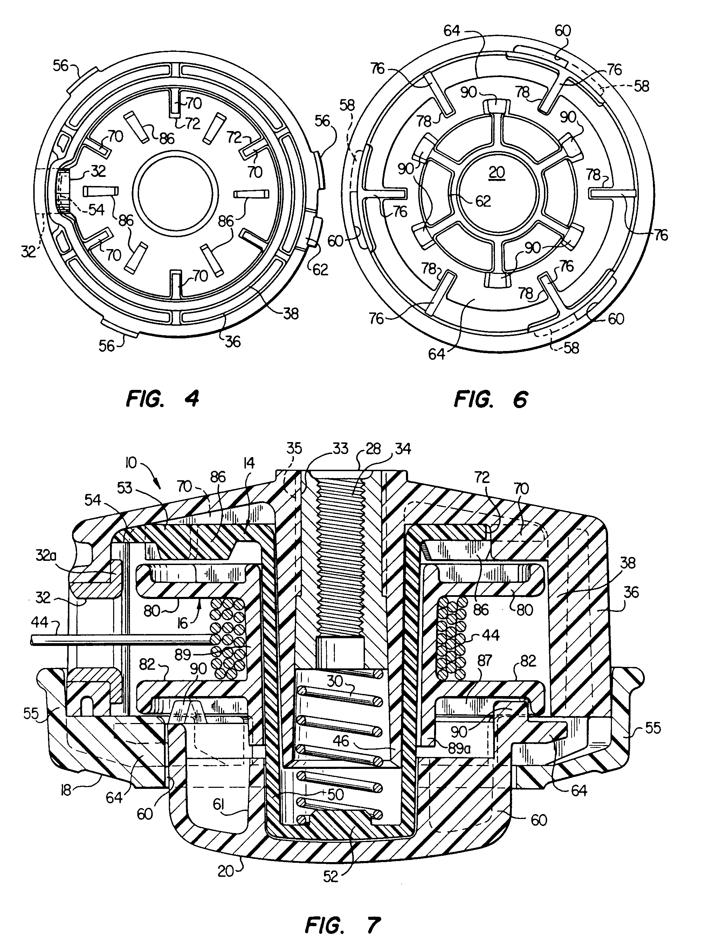

The upper locking plate and cup member 14 are driven by the housing 12 by six ribs 70 which are received in cooperating slots 72 in the upper locking plate as best illustrated in FIGURE 4. This arrangement transmits torque from the housing to the locking plate and cup member 14 while permitting the member 14 to reciprocate axially as required for operation. Similarly, as best seen in FIGURE 6, the button member 20 is keyed to the cover ring 18 by six ribs 76 on the cover ring 18 which are received in grooves 78 in the button member 20. The lower end of the ribs 70 of the housing 12 and the upper end of the ribs 76 of the cover ring 18 are dimensioned, when assembled, to prevent axial movement of the spool relative to the housing by contacting the peripheral flanges 80 and 82, respectively, of the spool 16. This condition is important in that the spool must be held against axial movement relative to the housing for good operation as will presently be evident.

As can best be seen in FIGURE 5, the spool 16 has six radially extending ribs 84 on the upper surface of the upper flange 80 extending between a central hub portion 89 in the outer peripheral upturned portion of flange 80. A corresponding number of lower ribs 88 are provided on the lower face of the lower flanges 87 of the spool, and are conveniently placed in the same angular position. Of course, the ribs on the spool could be offset and the locking teeth 86 angularly aligned with the control teeth 90. The spool 16 has an extension 89a of the hub 89 which extends significantly below the lower flange 82 and the ribs 88 to permit the operator to more easily grasp and extract the spool from the housing during its disassembly, as shown in FIGURE 3.

The edges 84a of the radially extending locking ribs 84 are preferably substantially parallel to the axis of the spool to provide a good locking surface, as best seen in FIGURE 5a. Similarly, the upper locking plate member 14 has six downwardly projecting surfaces or bosses which form locking teeth 86 which are adapted to engage the locking ribs 84 with mating faces parallel to the faces 84a of the spool to prevent rotation of the spool during normal operation when the locking plate is in the lower position. Similarly, the button member 20 has six upstanding bosses which form what are herein termed escapement control teeth 90 disposed around the periphery of the button member 20. The escapement control teeth 90 may have tapered edges 90a (see FIGURE 6) on each side to minimize friction when engaging correspondingly tapered faces 88a (see FIGURE 5b) as the button 20 is urged back toward the lower locking position by the spring as will presently be described.

The spacing between the upper locking teeth 86 and the lower escapement teeth 90 provided by the length of the cup portion 50 is such that either the locking teeth 86 or the escapement teeth 90 are always in position to engage either the upper ribs 84 or lower ribs 88 of the spool 16. When the spring has urged the cup 50 and therefore the button member 20 to the lowermost position illustrated in FIGURE 2 so that the flange 64 is engaging the cover 18, the locking teeth 86 engage the ribs 88 on the top of the spool 20. Conversely, when the button 20 is bumped against the ground to move the assembly into the position illustrated in FIGURE 7 so that the locking teeth 86 are moved above the ribs 84, the escapement teeth 90 will have moved into an interfering position relative to the lower ribs 88. When the cover 18 is connected to the housing 12, the locking teeth 86 are spaced at 60 degree intervals, and as shown in FIGURE 4, may conveniently be described as being at odd number clock positions of one, three, five, seven, nine and eleven, while the escapement teeth 90 which are also placed at 60 degree intervals, but offset 30 degrees from the teeth 86, corresponding to even numbered clock positions of two, four, six, eight, ten and twelve. These relationships are generally illustrated in FIGURES 4 and 6.

As previously mentioned, the head 10 is comprised of five injection molded plastic parts and three metallic parts. These parts are simple and economically fabricated and may be quickly and easily assembled in the manufacturing process by first inserting the arbor 28 in the housing member 12. If desired, the arbor can be molded in the housing at the time the housing member 12 is fabricated, or may be pressed in as a secondary operation. Next, the spring 30 is inserted in the spring chamber formed by wall 46 and the locking plate and cup assembly 14 telescoped over the spring chamber wall 46 so that the spring is slightly compressed to permit the eyelet 32 to be inserted. At this point, the tab 54 engages the flange of the eyelet 32 and the friction fit of the eyelet 32 within the opening in the housing 12 ensures that the assembled four components will not come apart. Next the line from the spool 16 is threaded through the eyelet 32 and the spool merely slipped over the cup portion 50 of the member 14. This is facilitated because of the clearance between the periphery of the spool 16 and the flange of eyelet 32 which provides increased clearance as compared to the lesser clearance between the periphery of the spool 16 and the interior surface of the interior wall 38 of the housing, which minimum clearance is required to ensure that the line does not become wedged between the spool and the housing. During the insertion of the spool, the assembler is not concerned with the force of the spring or the possible disassembly of the housing and the locking plate and cup member 14. The assembly is completed merely by placing the button 20 within the cover 18 and pressing the cover over the tabs 56 into the openings 60 to bias locking tab 62 inwardly, then rotating the tabs 62 into the grooves 58. The resulting assembly is best illustrated in the normal operating position shown in FIGURE 2, and in the bumped position in FIGURE 7.

In normal operation, the head 10 is in the condition best illustrated in FIGURE 2. In this condition, the spring 30 urges the member 14 downwardly against the button member 20 until the flange 64 of the button abuts against the cover member 18. The tension force side of this loop is completed through the coupling between the cover member and the housing 12 provided by the flanges 56 and grooves 58. In this position, the spool 16 is retained against downward axial movement by the ribs 76 in the cover member 18 so that the locking teeth 86 engage the upper ribs 84 on the spool and prevent rotation of the spool. The abutting faces of the ribs 84 and locking teeth 86 are both substantially parallel to the axis of the head so that there is no camming force tending to force the locking plate and cup member upwardly against the bias of the spring 30, thus assuring that no line will be payed out regardless of any unusual forces exerted on the line such as some times occur when the line becomes entangled in an immovable object.

When the line becomes worn or broken so that it is desirable to replenish the length of cutting line extending from the head, the operator merely bumps the head against the ground to shift the button 20 and locking plate and cup member 14 upwardly against the bias of the spring 30. As soon as the locking teeth 86 have cleared the ribs 84 on the top of the spool 16, the spool is free to rotate under the tension in the line resulting from centrifugal force or forces created by line contact with grass or similar vegetation. Since this force is substantial, the rotation of the spool is extremely rapid and far exceeds the ability of the spring 30 to return the locking teeth 86 into interfering position with the ribs 84. However, before the teeth 86 clear the ribs 84, the escapement teeth 90 have been moved upwardly to interfere with the rotation of the ribs 88 on the lower flange of the spool so that the spool cannot rotate more than 30 degrees before engaging the escapement teeth 90. The force of the spring 30 is sufficient that it causes the head to bounce upwardly, thus assuring that the button 20 is continually in contact with the locking plate and cup member so that the locking teeth 86 and the escapement teeth 90 maintain the appropriate spacing. Also, the tapered teeth in the lower flange of the spool and the tapered escapement teeth help to move the locking cup downwards once the tapping action is over. As the head rebounds from the ground, the spring forces the locking plate and cup member 14 and button 20 downwardly to disengage the escapement teeth 90 from the ribs 88 on the lower flange of the spool. Since the spacing between the two sets of teeth is maintained, the locking teeth move into an interfering relationship with the upper ribs 84 on the spool before the escapement teeth 90 release the lower ribs 88 on the spool. The spool is then free to index an additional 30 degrees until the ribs 84 again engage the teeth 86, thus providing a total of 60 degrees of spool rotation for each bump cycle. The bump cycle can be repeated as often as desired by the operator to feed the desired increments of line. If desired, a conventional blade (not shown) may be provided on the shield to trim the line to a maximum length if the operator should advance an excessive length of line.

In order to replace the line, the operator need only press the locking tab 62 inwardly so that the cover plate can be rotated until the tabs 56 leave the grooves 58 at which point the cover 18 and button 20 are removed to expose the spool 16. The extended hub portion 89a of the spool 16 may be grasped by the user to conveniently remove the spool from the housing assembly. At this time, the eyelet 32 again holds the locking plate and cup member 14 in position when the tab 54 engages the flange of the eyelet 32, thus ensuring that the operator does not disassemble the member 14 and spring from the housing member. A new supply of line may be wound on the spool by the user, or the user may purchase a new spool already wound with the appropriate length of line. As during assembly at the factory, the line may be threaded through the eyelet 32 and the spool placed in position without fighting the bias of the spring 30 or the need to simultaneously assemble multiple parts. The cover 18 and button 20 may then be placed over the spool and use of the device resumed.

It is evident that because of the symmetry of the ribs on the spool 16 and the symmetry of the locking teeth 86 and escapement teeth 90, except for the 30 degree offset, the head assembly will function with the line wound in either direction upon the spool, or with the head being driven by the prime mover in either direction. As a result, a single set of tooling may be used for all of the components except the arbor 28, in which the direction of the threads 34 would most appropriately be opposite to the direction of rotation so that normal operation would tend to continually tighten the coupling.

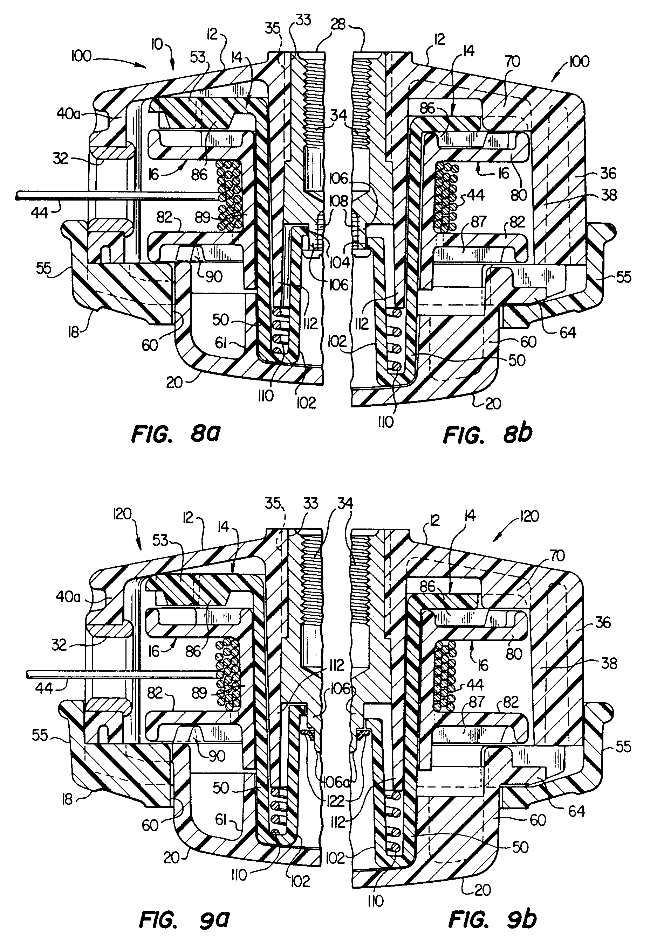

Referring now to FIGURES 8a and 8b, another embodiment of a head in accordance with the present invention is indicated generally by the reference numeral 100. The head 100 utilizes components which are the same as those previously described in connection with head 10 except that the extended flange 32a of the eyelet 32 and the tab 54 of the locking plate 53 are eliminated. Additionally, the cup 50 of the member 14 is modified by providing an upwardly extending boss 102 which conveniently extends upwardly to a point near the end of the arbor 28 and to form a peripheral shoulder 104 around an axially aligned opening. The arbor 28 has an extension 106 which extends through the opening defined by shoulder 104 and is sized to slide relative to the shoulder 104. A screw 108 is threaded into the extension 106 and includes a head larger than the opening in the shoulder 104. Additionally, the spring 110 is larger in diameter and shortened so as to engage the lower end of the wall 112 of the housing 12. The spring 110 is held in centered relationship so as to engage the lower end of wall 112 by having an outside diameter approximating the minimum internal diameter of the cup wall 50 which is slightly tapered for mold draft purposes.

In the assembly sequence of head 100, the eyelet 32 can be placed in the housing 12 prior to assembly of the locking plate and cup member 14 with the housing. Then the spring 110 may be placed in the cup portion 50 and the locking plate and cup member 14 pushed into position with the opening in shoulder 104 over the axial extension 106. The screw 108 may then be threaded into place so that the head of the screw will retain the locking plate and cup member 14 substantially in the operating position shown in the right-hand FIGURE 8b, even when the locking ring cover 18 and button member 20 are not assembled on the housing. When the locking ring 18 and button 20 are assembled and the unit is in operation, the locking plate and cup member 12 can be reciprocated upwardly into the position illustrated in FIGURE 8a as the shoulder 104 moves along the extension 106, to permit indexing of the spool 16 as heretofore described.

A further embodiment of the invention is indicated generally by the reference numeral 120 in FIGURES 9a and 9b. The device 120 is substantially identical to the device 100 of FIGURES 8a and 8b, and corresponding components are accordingly designated by the same reference numerals. The primary variation is that the boss 106 of the arbor is provided with an extension 106a of smaller diameter, and a conventional push nut 122 is used in combination with the extension 106a to replace the screw 108. Since it is intended that the user of the device 120 never disassemble the locking plate and cup member 14 from the housing 12, the permanent, non-replaceable locking nut 122 can be used to substantially expedite assembly while simultaneously reducing component cost. This is particularly true in that the spring 110 may be sized to exert minimum force on the push nut 122. Further, during normal use when repetitive pounding which would otherwise be applied to the push nut 122, the combination of the button member 20 and the cover ring 18 arrest the downward movement of the locking plate and cup member 12 before the shoulder 104 engages the push nut. As a result, the simple structure push nut can be used to function only in the static situation attending replacement of the line when it would otherwise not be satisfactory for the severe dynamic conditions to which the device is exposed in normal use.

The heads described and illustrated are specifically adapted for use with gasoline powered prime movers which drive the heads through a flexible drive shaft. However, the heads are equally useful in electric powered line trimmers merely by changing the arbor to be connected to the drive shaft of the motor. It is also desirable in some instances to mold fins on the upper surface of the housing member to form a centrifugal fan for cooling the electric motor in the conventional manner.

**Claims**

1.  A head assembly (10, 100, 120) for a flexible line trimmer comprising:
    housing means (12, 18) having upper and lower members, one of the members (12) having a generally cylindrical sidewall (36) with at least one aperture (32) formed therein, and being releasably coupled to the other member (18) to gain access to the interior of the housing;
    means (28) for coupling the upper housing member (12) to a drive shaft for rotation about an axis;
    locking means (14, 20), the locking means being rotatably driven and being reciprocable relative to the housing means between upper and lower positions;
    spring means (30) disposed between the upper member (12) of the housing means and the locking means (14,20) urging the locking means into the lower position;
    spool means (16) containing a supply of flexible cutting line (44) disposed in the housing means (12, 18), the spool means (16) being restrained from axial movement relative to the housing means;
    a supply of cutting line (44) wound on the spool (16) with the free end extending through the aperture (32) in the housing means (12, 18) into a cutting plane when the head assembly (10) is rotated at high speed;
    cooperating means (84-90) disposed on the locking means (14, 20) and on the spool means (16) for locking the spool (16) against rotation relative to the housing when the locking means (14, 20) is in the lower position and for permitting a first predetermined increment of relative rotation as the locking means (14, 20) is moved from the lower position to the upper position and a second predetermined increment of relative rotation as the locking means is moved from the upper position back to the lower position; and

the locking means (14, 20) including ground bumping means (20) protruding from the bottom of the housing means (12, 18) for shifting the locking means (14, 20) from the lower position to the upper position when the operator bumps the head assembly (10, 100, 120) against the ground and to be returned by the force of the spring (30) to the lower position to allow the spool (16) to rotate through the first and second increments of rotation in response to centrifugal force on the line (44) extending through the aperture (32) into the cutting plane to thereby payout a controlled increment of line;

characterized in that the locking means (14, 20) is directly rotatably driven by the housing (12, 18) and is separable into upper and lower members (14, 20) by the operator to permit the spool (16) to be removed for replacing a new supply of line (44), the spring means (30) being disposed between the upper member (14) of the locking means (14, 20) and the upper member (12) of the housing means (12, 18).

2. The head assembly of claim 1 further including retaining means (32a, 104, 106) for retaining the upper member (12, 14) in assembled condition with the spring means (30) therebetween when the lower members (18, 20) are separated from the upper member (12, 14).

3. The head assembly of claim 2 wherein the retaining means comprises means (32a, 104, 106) on the housing means interfering with excessive axial movement of the upper locking means (14).

4. The head assembly of claim 3 wherein the retaining means comprises an interference between a metallic eyelet (32, 32a) forming the aperture and the upper locking member (14).

5. The head assembly of claim 3 wherein the retaining means comprises extension means (106) connected to the housing means (12) and an aperture in the upper locking means (14), the extension means (112) extending through the aperture and including an enlarged portion (108, 122) greater in size than the aperture and being affixable to the housing means (12) after assembly of the upper locking means (14) and spring (30) in operative position relative to the housing means (12, 18).

6. The head assembly of claim 5 wherein the enlarged portion comprises the head of a screw (108).

7. The head assembly of claim 5 wherein the enlarged portion comprises a push nut (122).

8. The head assembly of any one of claim 1 to 7 wherein the upper member (14) of the locking means is driven by axially extending upper ribs (70) formed in the upper housing member (12) and cooperating grooves (72) formed in the upper member (14) of the locking means.

9. The head assembly of any one of claims 1 to 8, wherein the lower member (20) of the locking means is driven by axially extending lower ribs (76) formed in the lower housing member (18) and cooperating grooves (78) formed in the lower member (20) of the locking means.

10. The head assembly of claim 9 wherin the lower ends of the upper ribs (70) and the upper ends of the lower ribs (76) are axially spaced, when the housing members (12, 18) are assembled to restrain axial movement of the spool (16).

11. The head assembly of any one of claims 1 to 10 wherein the locking means comprises an upper member (14) haveing an upper locking plate (53) disposed above the spool (16) with a pluratlity of downwardly projecting locking teeth means (86) and a lower member (20) for engaging the ground having a plurality of upwardly projecting escapement teeth means (90); and

the spool (16) comprises a cylindrical hub (89) and upper and lower radially extending flanges (80, 82) having upwardly and downwardly projecting rib means (84, 88) for alternately cooperatively engaging the locking teeth means (86) and escapement teeth means (90) as the locking means (14, 20) is reciprocated from the lower position to the upper position and back to the lower position to control line payout.

12. The head assembly of claim 11 wherein the spool (16) further includes an extension (89a) of the hub (89) below the lower flange (82) facilitating grasping by the operator for removing the spool (16) from the operative position when the lower members (18, 20) are separated from the upper members (12, 14).

**13.** The head assembly of claim 1 wherein the upper housing member (12) includes an inner cylindrical wall (46) coaxial with the axis of rotation, forming a chamber for the spring means (30);

the locking means (14, 20) includes a cup section (50) disposed around said inner cylindrical wall (46), the cup section (50) being reciprocable with the locking means (14, 20) and

said spring means (30) is disposed in the cup section (50) and the chamber to bias the locking means (14, 20) into said lower position.

**14.** The head assembly of claim 13 wherein said spool (16) has a hub (89) disposed around the cup section (50) of the locking means (14, 20), having parallel upper and lower flanges (80, 82) extending radially outwardly from said hub (89).

**15.** The head assembly of claim 14 wherein said ground bumping means (20) extends through a central opening (60) in a cover member (18) of the lower housing, for moving the locking means (14, 20) from the lower position to the upper position against bias of the spring means (30) by movement of the ground bumping means (20) in contact with the cup section (50) of the locking means (14, 20).

**16.** The head assembly of claim 15 wherein the ground bumping means (20) is a separate button member held in place by the cover member (18).

**17.** The head assembly of claim 14 wherein the hub (89) extends substantially beyond one (82) of the flanges a distance to permit the user to grasp the extended portion to facilitate removal of the spool (16) from the head.

**18.** The head assembly of claim 1 wherein:

the upper housing member (12) includes an inner cylindrical wall (46) coaxial with said outer cylindrical wall (36) and the axis of rotation and the lower housing member is a separable cover member (18);

the outer cylindrical wall (36) of the upper housing member (12) is closed at the upper end by an upper end wall;

the locking means (14, 20) having a locking plate (53) and a cup section (50) disposed below the plate (53) and around the inner cylindrical wall (46) of the upper housing member (12) for axial reciprocation between said upper and lower positions of the locking means (14, 20); and

upper longitudinally extending rib means (70) within the housing member (12) cooperating with grooves (72) on the periphery of the locking plate (53) for transmitting torque from the housing member (12) to the locking plate (53) while permitting the locking plate (53) to reciprocate between the lower and upper positions.

**19.** The head assembly of claim 18 further including:

the ground bumping means having a button member (20) extending from a central opening (60) in the lower housing cover member (18), having a peripheral, radially extending flange (64) disposed above the cover member (18) for retaining the button member (20) within the head in a lower position against the lower end (52) of the cup section (50), while permitting the button member (20), in response to bumping the ground, to move from the lower position to an upper position in which the locking plate (53) has been moved against the bias of the spring (30) to its upper position.

**20.** The head assembly of claim 19 wherein:

longitudinal extending rib means (76) carried by the cover member (18) cooperate with grooves (78) in the perifery of the periferal flange (64) of the button member (20) for transmitting torque from the cover member (18) to the button member (20) while permitting the button member (20) to reciprocate between the lower and upper positions of the locking means (14, 20).

**21.** The head assembly of claim 19 wherein said spool has a hub (89) disposed around the cup section (50) of the locking means (14, 20), having parallel upper and lower flanges (82, 80) extending radially outward from said hub (89).

**22.** The head assembly of claim 21 wherein:

said cooperating means disposed on the locking means (14, 20) and the spool means (16) comprise upper and lower rib means (84, 88) formed on the upper and lower flanges (80, 82) of the spool (16);

locking teeth means (86) on the lower surface of the locking plate (53) for engaging said upper rib means (84) of the spool (16); and

escapement teeth means (90) formed on the upper surface of the button member (20) for engaging the lower rib means (88) of the spool (16).

**23.** The head assembly of claim 22 wherein said locking teeth means (86) being axially and circumferentially spaced relative to the escapement teeth means (90) for permitting a predetermined increment of rotation of the spool (16) relative to the housing (12, 18,) as the locking plate (53) and button member (20) are reciprocated from the lower position to the upper position as a result of the button member (20) being bumped against the ground.

24. The head assembly of claim 22 wherein the hub (89) extends substantially beyond one of the flanges (82) a distance to permit the user to grasp the extended portion (89a) to facilitate removal of the spool (16) from the head.

25. The head assembly of claim 24 wherein the faces of the upper rib means (84) which cooperatively engage the locking teeth means (86) are substantially parallel to the axis of the spool (16).

26. The head assembly of claim 25 wherein the faces of the lower rib means (88) which cooperatively engage the escapement teeth means (90) are inclined to the axis of rotation to enhance return of the locking means (14, 20) to the upper position.

## Revendications

1. Ensemble de tête (10, 100, 120) pour tailleuse à fil flexible, comprenant :

   un ensemble de boîtier (12, 18) comportant des éléments supérieur et inférieur, un premier élément (12) comportant une paroi latérale (36) de forme générale cylindrique dans laquelle est formée au moins une ouverture (32), et étant accouplé de façon amovible au second élément (18) pour permettre d'accéder à l'intérieur du boîtier ;

   des moyens (28) pour accoupler l'élément de boîtier supérieur (12) à un arbre d'entraînement aux fins de rotation autour d'un axe ;

   des moyens de blocage (14, 20), les moyens de blocage étant entraînés en rotation et pouvant effectuer des mouvements de va-et-vient par rapport à l'ensemble de boîtier entre des positions supérieure et inférieure ;

   un ressort (30), disposé entre l'élément supérieur (12) de l'ensemble de boîtier et les moyens de blocage (14, 20) rappelant les moyens de blocage vers leur position inférieure ;

   un ensemble de bobine (16) contenant une charge de fil coupant flexible (44) disposé dans l'ensemble de boîtier (12, 18), l'ensemble de bobine étant empêché de se déplacer axialement par rapport à l'ensemble de boîtier ;

   une charge de fil coupant (44) enroulée sur la bobine (16), dont l'extrémité libre s'étend, à travers l'ouverture (32) de l'ensemble de boîtier (12, 18) dans un plan de coupe lorsque l'ensemble de tête (10) est entraîné en rotation à vitesse élevée ;

   des moyens de coopération (84-90) disposés sur les moyens de blocage (14, 20) et la bobine (16) pour bloquer la bobine (16) en rotation par rapport au boîtier lorsque les moyens de blocage (14, 20) sont dans la position inférieure et pour permettre un premier pas prédéterminé de rotation relative lorsque les moyens de blocage (14, 20) passent de la position inférieure à la position supérieure et un second pas de rotation relative prédéterminé lorsque les moyens de blocage reviennent de la position supérieure à la position inférieure ; et

   les moyens de blocage (14, 20) comprenant un élément de contact avec le sol (20) dépassant du fond de l'ensemble de boîtier (12, 18) pour faire passer les moyens de blocage (14, 20) de la position inférieure à la position supérieure lorsque l'opérateur frappe l'ensemble de tête (10, 100, 120) contre le sol et qu'ils soient ramenés par la force du ressort (30) dans la position inférieure pour permettre à la bobine (16) de tourner du premier et du second pas de rotation en réaction à la force centrifuge sur le fil (44) s'étendant, à travers l'ouverture (32), dans le plan de coupe pour dévider ainsi un incrément de fil réglé ;

   caractérisé en ce que les moyens de blocage (14, 20) sont entraînés directement en rotation par le boîtier (12, 18) et peuvent être séparés en les éléments supérieur et inférieur (14, 20) par l'opérateur pour permettre de retirer la bobine (16) pour remettre une nouvelle charge de fil (44), le ressort (30) étant disposé entre l'élément supérieur (14) des moyens de blocage (14, 20) et l'élément supérieur (12) de l'ensemble de boîtier (12, 18).

2. Ensemble de tête selon la revendication 1, comprenant en outre des moyens de retenue (32a, 104, 106) pour maintenir l'élément supérieur (12, 14) à l'état assemblé avec le ressort (30) interposé, lorsque les éléments inférieurs (18, 20) sont séparés de l'élément supérieur (12, 14).

3. Ensemble de tête selon la revendication 2, dans lequel les moyens de retenue comprennent des moyens (32a, 104, 106) sur l'ensemble de boîtier s'opposant à un déplacement axial excessif du moyen de blocage supérieur (14).

**4.** Ensemble de tête selon la revendication 3, dans lequel les moyens de retenue consistent en une interaction entre un oeillet métallique (32, 32a) formant l'ouverture et l'élément de blocage supérieur (14).

**5.** Ensemble de tête selon la revendication 3, dans lequel les moyens de retenue comprennent un prolongement (106) relié à l'ensemble de boîtier (12) et une ouverture dans le moyen de blocage supérieur (14), le prolongement (106) s'étendant à travers l'ouverture et comprenant une portion agrandie (108, 122) de dimension plus grande que l'ouverture et pouvant être fixée à l'ensemble de boîtier (12) après montage du moyen de blocage supérieur (14) et du ressort (30) en position de fonctionnement par rapport à l'ensemble de boîtier (12, 18).

**6.** Ensemble de tête selon la revendication 5, dans lequel la portion agrandie consiste en la tête d'une vis (108).

**7.** Ensemble de tête selon la revendication 5, dans lequel la portion agrandie consiste en un écrou de blocage (122).

**8.** Ensemble de tête selon l'une quelconque des revendications 1 à 7, dans lequel l'élément supérieur (14) des moyens de blocage est entraîné par des nervures supérieures (70) dirigées axialement formées dans l'élément de boîtier supérieur (12) et des rainures (72) qui coopèrent et sont formées dans l'élément supérieur (14) des moyens de blocage.

**9.** Ensemble de tête selon l'une quelconque des revendications 1 à 8, dans lequel l'élément inférieur (20) des moyens de blocage est entraîné par des nervures inférieures (76) dirigées axialement formées dans l'élément de boîtier inférieur (18) et des rainures (78) qui coopèrent et sont formées dans l'élément inférieur (20) des moyens de blocage.

**10.** Ensemble de tête selon la revendication 9, dans lequel les extrémités inférieures des nervures supérieures (70) et les extrémités supérieures des nervures inférieures (76) sont séparées axialement lorsque les éléments de boîtier (12, 18) sont assemblés pour s'opposer au déplacement axial de la bobine (16).

**11.** Ensemble de tête selon l'une quelconque des revendications 1 à 10, dans lequel les moyens de blocage comprennent un élément supérieur (14) comportant une plaque de blocage supérieure (53) disposée au-dessus de la bobine (16) avec une pluralité de dents de blocage (86) faisant saillie vers le bas et un élément inférieur (20) pour contacter le sol comportant une pluralité de dents d'échappement (90) faisant saillie vers le haut, et
la bobine 16 comprend un moyeu cylindrique (89) et des brides supérieure et inférieure (80, 82) s'étendant radialement, comportant des ensembles de nervures (84, 88) faisant saillie vers le haut et vers le bas pour contacter alternativement aux fins de coopérer avec eux les dents de blocage (86) et les dents d'échappement (90) lorsque les moyens de blocage (14, 20) sont entraînés en va-et-vient de la position inférieure à la position supérieure et en retour à la position inférieure pour commander le dévidage du fil.

**12.** Ensemble de tête selon la revendication 11, dans lequel la bobine (16) comprend en outre un prolongement (89a) du moyeu (89) au-dessous de la bride inférieure (82) facilitant la saisie par l'opérateur pour retirer la bobine (16) de la position de fonctionnement lorsque les éléments inférieurs (18, 20) sont séparés des éléments supérieurs (12, 14).

**13.** Ensemble de tête selon la revendication 1, dans lequel l'élément de boîtier supérieur (12) comprend une paroi cylindrique intérieure (46) coaxiale par rapport à l'axe de rotation, formant une chambre pour le ressort (30) ;
les moyens de blocage (14, 20) comprennent une section de cuvette (50) disposée autour de ladite paroi cylindrique intérieure (46), la section de cuvette (50) pouvant effectuer des mouvements de va-et-vient avec les moyens de blocage (14, 20) et
ledit ressort (30) est disposé dans la section de cuvette (50) et la chambre pour rappeler les moyens de blocage (14, 20) dans ladite position inférieure.

**14.** Ensemble de tête selon la revendication 13, dans lequel ladite bobine (16) comporte un moyeu (89) disposé autour de la section de cuvette (50) des moyens de blocage (14, 20), comportant des brides supérieure et inférieure parallèles (80, 82) s'étendant radialement vers l'extérieur à partir dudit moyeu (89).

**15.** Ensemble de tête selon la revendication 14, dans lequel lesdits moyens de contact avec le sol (20) s'étendent à travers une ouverture centrale (60) d'un élément de couvercle (18) du boîtier inférieur, pour faire passer les moyens de blocage (14, 20) de la position inférieure à la position supérieure contre l'action de rappel du ressort (30) par déplacement de l'élément de contact avec le sol (20) en contact avec la section de cuvette (50) des moyens de blocage (14, 20).

16. Ensemble de tête selon la revendication 15, dans lequel le moyen de contact avec le sol (20) est un élément en forme de bouton séparé maintenu en place par l'élément de couvercle (18).

17. Ensemble de tête selon la revendication 14, dans lequel le moyeu (89) s'étend sensiblement au-delà de l'une (82) des brides sur une distance permettant à l'utilisateur de saisir la portion prolongée pour faciliter le retrait de la bobine (16) de la tête.

18. Ensemble de tête selon la revendication 1, dans lequel :
l'élément de boîtier supérieur (12) comprend une paroi cylindrique intérieure (46) coaxiale avec ladite paroi cylindrique extérieure (36) et l'axe de rotation et l'élément de boîtier inférieur est un élément de couvercle (18) séparable ;
la paroi cylindrique extérieure (36) de l'élément de boîtier supérieur (12) est fermée à l'extrémité supérieure par une paroi terminale supérieure ;
les moyens de blocage (14, 20) comportent une plaque de blocage (53) et une section de cuvette (50) disposée au-dessous de la plaque (53) et autour de la paroi cylindrique intérieure (46) de l'élément de boîtier supérieur (12) de façon à effectuer un mouvement de va-et-vient axial entre les positions supérieure et inférieure des moyens de blocage (14, 20) ; et
un ensemble de nervures supérieures dirigées longitudinalement (70) à l'intérieur de l'élément de boîtier supérieur (12) coopérant avec des rainures (72) situées sur la périphérie de la plaque de blocage (53) pour transmettre un couple de l'élément de boîtier (12) à la plaque de blocage (53), tout en permettant à la plaque de blocage (53) d'effectuer des mouvements de va-et-vient entre les positions supérieure et inférieure.

19. Ensemble de tête selon la revendication 18, comprenant en outre :
le moyen de contact avec le sol comportant un bouton (20) s'étendant à partir d'une ouverture centrale (60) de l'élément de couvercle de boîtier inférieur (18), comportant une bride périphérique dirigée radialement (64) disposée au-dessus du couvercle (18) pour retenir le bouton (20) à l'intérieur de la tête dans une position inférieure contre l'extrémité inférieure (52) de la section de cuvette (50), tout en permettant au bouton (20), en réaction au choc avec le sol, de passer de la position inférieure dans une position supérieure dans laquelle la plaque de blocage (53) a été amenée contre la force de rappel du ressort (30) dans sa position supérieure.

20. Ensemble de tête selon la revendication 19, dans lequel :
un ensemble de nervures dirigées longitudinalement (76) porté par le couvercle (18) coopère avec des rainures (78) situées à la périphérie de la bride périphérique (64) du bouton (20) pour transmettre un couple du couvercle (18) au bouton (20), tout en permettant au bouton (20) d'effectuer des mouvements de va-et-vient entre les positions inférieure et supérieure des moyens de blocage (14, 20).

21. Ensemble de tête selon la revendication 19, dans lequel ladite bobine comporte un moyeu (89) disposé autour de la section de cuvette (50) des moyens de blocage (14, 20) comportant des brides supérieure et inférieure parallèles (82, 80) s'étendant radialement vers l'extérieur à partir dudit moyeu (89).

22. Ensemble de tête selon la revendication 21, dans lequel :
lesdits moyens de coopération disposés sur les moyens de blocage (14, 20) et la bobine (16) comprennent des ensembles de nervures supérieures et inférieures (84, 88) formés sur les brides supérieure et inférieure (80, 82) de la bobine (16) ;
un ensemble de dents de blocage (86) sur la surface inférieure de la plaque de blocage (53) pour contacter ledit ensemble de nervures supérieures (84) de la bobine (16) ; et
un ensemble de dents d'échappement (90) formées sur la surface supérieure du bouton (20) pour contacter l'ensemble de nervures inférieures (88) de la bobine (16).

23. Ensemble de tête selon la revendication 22, dans lequel ledit ensemble de dents de blocage (86) est séparé axialement et circonférentiellement de l'ensemble de dents d'échappement (90) pour permettre un pas de rotation prédéterminé de la bobine (16) par rapport au boîtier (12, 18), lorsque la plaque de blocage (53) et le bouton (20) effectuent des mouvements de va-et-vient de la position inférieure à la position supérieure, en raison du choc du bouton (20) contre le sol.

**24.** Ensemble de tête selon la revendication 22, dans lequel le moyeu (89) s'étend nettement au-delà de l'une des brides (82) sur une distance permettant à l'utilisateur de saisir la portion prolongée (89a) pour faciliter le retrait de la bobine (16) de la tête.

**25.** Ensemble de tête selon la revendication 24, dans lequel les faces des nervures supérieures (84) qui coopèrent avec les dents de blocage (86) en les contactant sont sensiblement parallèles à l'axe de la bobine (16).

**26.** Ensemble de tête selon la revendication 25, dans lequel les faces des nervures inférieures (88) qui coopèrent avec les dents d'échappement (90) en les contactant sont inclinées par rapport à l'axe de rotation pour favoriser le retour des moyens de blocage (14, 20) dans la position supérieure.

**Patentansprüche**

**1.** Kopfanordnung (10, 100, 120) für eine Schneidvorrichtung mit flexiblem Faden, mit:
einer Gehäuseeinrichtung (12, 18) mit einem oberen und einem unteren Element, wobei das eine Element (12) eine allgemein zylindrische Seitenwand (36) mit wenigstens einer darin ausgebildeten Öffnung (32) aufweist und mit dem anderen Element (18) lösbar gekoppelt ist, um Zugang in das Innere des Gehäuses zu schaffen;
einer Einrichtung (28) zum Koppeln des oberen Gehäuseelements (12) mit einer Antriebswelle zur Rotation um eine Achse;
einer Verriegelungseinrichtung (14, 20), die drehbar angetrieben ist und relativ zu der Gehäuseeinrichtung zwischen einer oberen und einer unteren Position hinund herbewegbar ist;
einer zwischen dem oberen Element (12) der Gehäuseeinrichtung und der Verriegelungseinrichtung (14, 20) angeordneten Federeinrichtung (30), die die Verriegelungseinrichtung in die untere Position drückt;
einer Spuleneinrichtung (16), die einen Vorrat von in der Gehäuseeinrichtung (12, 18) angeordnetem, flexiblen Schneidfaden (44) enthält, wobei die Spuleneinrichtung (16) an einer axialen Bewegung relativ zu der Gehäuseeinrichtung gehindert ist;
einem Vorrat an Schneidfaden (44), der auf die Spule (16) gewickelt ist und dessen freies Ende sich durch die Öffnung (32) in der Gehäuseeinrichtung (12, 18) hindurch in eine Schneidebene erstreckt, wenn sich die Kopfanordnung (10) mit hoher Drehzahl dreht; und
mit an der Verriegelungseinrichtung (14, 20) und der Spuleneinrichtung (16) angeordneten und mit diesen zusammenwirkenden Einrichtungen (84-90) zum Verriegeln der Spule (16) gegen Rotation relativ zu dem Gehäuse, wenn sich die Verriegelungseinrichtung (14, 20) in der unteren Position befindet, sowie zur Ermöglichung eines ersten vorbestimmten Zuwachsbetrags einer relativen Rotationsbewegung, wenn die Verriegelungseinrichtung (14, 20) aus der unteren Position in die obere Position bewegt wird, sowie eines zweiten vorbestimmten Zuwachsbetrags einer relativen Rotationsbewegung, wenn die Verriegelungseinrichtung von der oberen Position in die untere Position zurückbewegt wird; und
wobei die Verriegelungseinrichtung (14, 20) eine vom Boden der Gehäuseeinrichtung (12, 18) wegragende Bodenanschlageinrichtung (20) aufweist, die zum Verschieben der Verriegelungseinrichtung (14, 20) von der unteren Position in die obere Position, wenn die Bedienungsperson die Kopfanordnung (10, 100, 120) gegen den Boden schlägt, ausgelegt ist und durch die Kraft der Feder (30) in die untere Position rückführbar ist, so daß sich die Spule (16) ansprechend auf die auf den sich durch die Öffnung (32) in die Schneidebene erstreckenden Faden (44) wirkende Zentrifugalkraft um den ersten und den zweiten Rotationszuwachsbetrag drehen kann, um dadurch eine gesteuerte Fadenzuwachslänge abzugeben;
dadurch gekennzeichnet, daß die Verriegelungseinrichtung (14, 20) von dem Gehäuse (12, 18) direkt rotationsmäßig angetrieben wird und von der Bedienungsperson in ein oberes und ein unteres Element (14, 20) trennbar ist, so daß sich die Spule (16) zum Ersetzen eines neuen Fadenvorrats (44) entfernen läßt, wobei die Federeinrichtung (30) zwischen dem oberen Element (14) der Verriegelungseinrichtung (14, 20) und dem oberen Element (12) der Gehäuseeinrichtung (12, 18) angeordnet ist.

**2.** Kopfanordnung nach Anspruch 1,
dadurch gekennzeichnet, daß eine Festhalteeinrichtung (32a, 104, 106) vorgesehen ist zum Halten des oberen Elements (12, 14) im zusammengebauten Zustand, wobei die Federeinrichtung (30) dazwischen angeordnet ist, wenn die unteren Elemente (18, 20) von dem oberen Element (12, 14) getrennt sind.

**3.** Kopfanordnung nach Anspruch 2,
dadurch gekennzeichnet, daß die Festhalteeinrichtung an der Gehäuseeinrichtung eine Einrichtung (32a, 104, 106) aufweist, die eine exzessive axiale Bewegung der oberen Verriegelungseinrichtung (14) behindert.

4. Kopfanordnung nach Anspruch 3,
dadurch gekennzeichnet, daß die Festhalteeinrichtung eine gegenseitige Beeinträchtigung zwischen einer die Öffnung bildenden metallischen Öse (32, 32a) und dem oberen Verriegelungselement (14) vorsieht.

5. Kopfanordnung nach Anspruch 3,
dadurch gekennzeichnet, daß die Festhalteeinrichtung eine mit der Gehäuseeinrichtung (12) verbundene Fortsatzeinrichtung (106) sowie eine Öffnung in der oberen Verriegelungseinrichtung (14) umfaßt, wobei sich die Fortsatzeinrichtung (112) durch die Öffnung erstreckt und einen vergrößerten Bereich (108, 122) beinhaltet, der größer dimensioniert ist als die Öffnung und nach der Montage der oberen Verriegelungseinrichtung (14) und der Feder (30) in der Betriebsposition relativ zu der Gehäuseeinrichtung (12, 18) an der Gehäuseeinrichtung (12) anbringbar ist.

6. Kopfanordnung nach Anspruch 5,
dadurch gekennzeichnet, daß der vergrößerte Bereich den Kopf einer Schraube (108) umfaßt.

7. Kopfanordnung nach Anspruch 5
dadurch gekennzeichnet, daß der vergrößerte Bereich eine Drück-Mutter (122) umfaßt.

8. Kopfanordnung nach einem der Ansprüche 1 bis 7,
dadurch gekennzeichnet, daß das obere Element (14) der Verriegelungseinrichtung durch in dem oberen Gehäuseelement (12) ausgebildete, axial verlaufende obere Rippen (70) sowie durch damit zusammenwirkende und in dem oberen Element (14) der Verriegelungseinrichtung ausgebildete Nuten (72) angetrieben wird.

9. Kopfanordnung nach einem der Ansprüche 1 bis 8,
dadurch gekennzeichnet, daß das untere Element (20) der Verriegelungseinrichtung durch in dem unteren Gehäuseelement (18) ausgebildete, axial verlaufende untere Rippen (76) sowie durch damit zusammenwirkende und in dem unteren Element (20) der Verriegelungseinrichtung ausgebildete Nuten (78) angetrieben wird.

10. Kopfanordnung nach Anspruch 9,
dadurch gekennzeichnet, daß die unteren Enden der oberen Rippen (70) und die oberen Enden der unteren Rippen (76) axial voneinander beabstandet sind, wenn die Gehäuseelemente (12, 18) zusammengebaut sind, um eine axiale Bewegung der Spule (16) zu verhindern.

11. Kopfanordnung nach einem der Ansprüche 1 bis 10,
dadurch gekennzeichnet, daß die Verriegelungseinrichtung ein oberes Element (14) mit einer über der Spule (16) angeordneten oberen Verriegelungsplatte (53) mit einer mehrere nach unten ragende Zähne aufweisenden Verriegelungszahneinrichtung (86) sowie ein unteres Element (20) mit einer mehrere nach oben ragende Zähne aufweisenden Hemmzahneinrichtung (90) umfaßt; und
daß die Spule (16) eine zylindrische Nabe (89) sowie einen oberen und einen unteren radial verlaufenden Flansch (80, 82) umfaßt, die eine nach oben bzw. nach unten wegragende Rippeneinrichtung (84, 88) aufweisen zum abwechselnden in zusammenwirkenden Eingriff Bringen der Verriegelungszahneinrichtung (86) und der Hemmzahneinrichtung (90), wenn die Verriegelungseinrichtung (14, 20) zum Steuern der Fadenabgabe aus der unteren Position in die obere Position und wieder zurück in die untere Position hin- und herbewegt wird.

12. Kopfanordnung nach Anspruch 11,
dadurch gekennzeichnet, daß die Spule (16) weiterhin einen Fortsatz (89a) der Nabe (89) unterhalb des unteren Flansches (82) aufweist, der der Bedienungsperson das Greifen der Spule (16) zum Entfernen derselben aus der Betriebsposition erleichtert, wenn die unteren Elemente (18, 20) von den oberen Elementen (12, 14) getrennt sind.

13. Kopfanordnung nach Anspruch 1,
dadurch gekennzeichnet, daß das obere Gehäuseelement (12) eine innere zylindrische Wand (46) umfaßt, die koaxial mit der Rotationsachse ist und eine Kammer für die Federeinrichtung (30) bildet;
daß die Verriegelungseinrichtung (14, 20) einen um die innere zylindrische Wand (46) herum angeordneten becherartigen Abschnitt (50) beinhaltet, der zusammen mit der Verriegelungseinrichtung (14, 20) hin- und herbewegbar ist, und
daß die Federeinrichtung (30) zum Vorspannen der Verriegelungseinrichtung (14, 20) in die untere Position in dem becherartigen Abschnitt (50) und der Kammer angeordnet ist.

14. Kopfanordnung nach Anspruch 13,
dadurch gekennzeichnet, daß die Spule (16) eine um den becherartigen Abschnitt (50) der Verriegelungseinrichtung (14, 20) angeordnete Nabe (89) mit einem oberen und einem unteren Flansch (80, 82) aufweist, die sich parallel zueinander von der Nabe (89) radial nach außen wegerstrecken.

15. Kopfanordnung nach Anspruch 14, dadurch gekennzeichnet, daß sich die Bodenanschlageinrichtung (20) durch eine zentrale Öffnung (60) in einem Abdeckelement (18) des unteren Gehäuses erstreckt, um die Verriegelungseinrichtung (14, 20) gegen die Vorspannung der Federeinrichtung (30) durch Bewegen der Bodenanschlageinrichtung (20) in Berührung mit dem becherartigen Abschnitt (50) der Verriegelungseinrichtung (14, 20) von der unteren Position in die obere Position zu bewegen.

16. Kopfanordnung nach Anspruch 15, dadurch gekennzeichnet, daß es sich bei der Bodenanschlageinrichtung (20) um ein durch das Abdeckelement (18) in seiner Position festgehaltenes, separates knopfartiges Element handelt.

17. Kopfanordnung nach Anspruch 14, dadurch gekennzeichnet, daß sich die Nabe (89) im wesentlichen über einen (82) der Flansche über eine derartige Strecke hinauserstreckt, daß dem Benutzer ein Greifen des Verlängerungsbereichs zum leichteren Entfernen der Spule (16) von dem Kopf ermöglicht ist.

18. Kopfanordnung nach Anspruch 1, dadurch gekennzeichnet, daß das obere Gehäuseelement (12) eine innere zylindrische Wand (46) beinhaltet, die koaxial mit der äußeren zylindrischen Wand (36) und der Rotationsachse ist, und es sich bei dem unteren Gehäuseelement um ein lösbares Abdeckelement (18) handelt; daß die äußere zylindrische Wand (36) des oberen Gehäuseelements (12) an dem oberen Ende durch eine obere Endwand geschlossen ist; daß die Verriegelungseinrichtung (14, 20) eine Verriegelungsplatte (53) und einen unter der Platte (53) sowie um die innere zylindrische Wand (46) des oberen Gehäuseelements (12) herum angeordneten becherartigen Abschnitt (50) zur axialen Hin- und Herbewegung zwischen der oberen und der unteren Position der Verriegelungseinrichtung (14, 20) aufweist; und daß eine obere in Längsrichtung verlaufende Rippeneinrichtung (71) innerhalb des Gehäuseelements (12) mit Nuten (72) am Umfang der Verriegelungsplatte (53) zusammenwirkt, um Drehmoment von dem Gehäuseelement (12) auf die Verriegelungsplatte (53) zu übertragen, während der Verriegelungsplatte (53) eine Hin-und Herbewegung zwischen der unteren und der oberen Position ermöglicht ist.

19. Kopfanordnung nach Anspruch 18, dadurch gekennzeichnet, daß die Bodenanschlageinrichtung ein sich von einer zentralen Öffnung (60) in dem unteren Gehäuseabdeckelement (18) wegerstreckendes knopfartiges Element (20) aufweist, das einen über dem Abdeckelement (18) angeordneten, umlaufenden, radialen Flansch (64) zum Festhalten des knopfartigen Elements (20) innerhalb des Kopfes in einer unteren Position in Anlage an dem unteren Ende (52) des becherartigen Abschnitts (50) aufweist, während dem knopfartigen Element (20) ansprechend auf ein Aufschlagen auf dem Boden eine Bewegung aus der unteren Position in eine obere Position ermöglicht ist, in der die Verriegelungsplatte (53) gegen die Vorspannung der Feder (30) in ihre obere Position bewegt worden ist.

20. Kopfanordnung nach Anspruch 19, dadurch gekennzeichnet, daß eine von dem Abdeckelement (18) getragene, in Längsrichtung verlaufende Rippeneinrichtung (76) zusammenwirkend mit Nuten (78) im Umfang des umlaufenden Flansches (64) des knopfartigen Elements (20) vorgesehen ist zum Übertragen von Drehmoment von dem Abdeckelement (18) auf das knopfartige Element (20), während dem knopfartigen Element (20) eine Hin- und Herbewegung zwischen der unteren und der oberen Position der Verriegelungseinrichtung (14, 20) gestattet ist.

21. Kopfanordnung nach Anspruch 19, dadurch gekennzeichnet, daß die Spule eine um den becherartigen Abschnitt (50) der Verriegelungseinrichtung (14, 20) angeordnete Nabe (89) mit einem oberen und einem unteren Flansch (82, 80) aufweist, die sich parallel zueinander von der Nabe (89) radial nach außen wegerstrecken.

22. Kopfanordnung nach Anspruch 21, dadurch gekennzeichnet, daß die an der Verriegelungseinrichtung (14, 20) und der Spuleneinrichtung (16) angeordneten Zusammenwirkungseinrichtungen eine an dem oberen und dem unteren Flansch (80, 82) der Spule (16) angeordnete obere bzw. untere Rippeneinrichtung (84, 88) beinhalten; daß an der unteren Oberfläche der Verriegelungsplatte (53) eine Verriegelungszahneinrichtung (86) zum Angreifen an der oberen Rippeneinrichtung (84) der Spule (16) vorgesehen ist; und

daß an der oberen Oberfläche des knopfartigen Elements (20) eine Hemmzahneinrichtung (90) zum Angreifen an der unteren Rippeneinrichtung (88) der Spule (16) ausgebildet ist.

23. Kopfanordnung nach Anspruch 22, dadurch gekennzeichnet, daß die Verriegelungszahn

einrichtung (86) von der Hemmzahneinrichtung (90) axial und umfangsmäßig beabstandet ist, um eine vorbestimmte inkrementelle Rotation der Spule (16) relativ zu dem Gehäuse (12, 18) zu gestatten, wenn die Verriegelungsplatte (53) und das knopfartige Element (20) als Ergebnis eines Aufschlagens des knopfartigen Elements auf den Boden von der unteren Position in die obere Position bewegt werden.

24. Kopfanordnung nach Anspruch 22, dadurch gekennzeichnet, daß sich die Nabe (89) im wesentlichen über einen der Flansche (82) über eine derartige Distanz hinauserstreckt, daß dem Benutzer ein Greifen des Verlängerungsbereichs (89a) zum einfacheren Entfernen der Spule (16) von dem Kopf gestattet ist.

25. Kopfanordnung nach Anspruch 24, dadurch gekennzeichnet, daß die Stirnseiten der oberen Rippeneinrichtung (84), die an der Verriegelungszahneinrichtung (86) in mit dieser zusammenwirkender Weise angreifen, im wesentlichen parallel zu der Achse der Spule (16) sind.

26. Kopfanordnung nach Anspruch 25, dadurch gekennzeichnet, daß die Stirnseiten der unteren Rippeneinrichtung (88), die mit der Hemmzahneinrichtung (90) in mit dieser zusammenwirkender Weise angreifen, in bezug auf die Rotationsachse schräg verlaufen, um ein Rückführen der Verriegelungseinrichtung (14, 20) in die obere Position zu fördern.

FIG. 1

FIG. 2

FIG. 3

FIG. 5a

FIG. 5

FIG. 5b

FIG. 4

FIG. 6

FIG. 7

FIG. 8a

FIG. 8b

FIG. 9a

FIG. 9b